# EUROPEAN PATENT SPECIFICATION

(11) **EP 2 153 294 B1**
(45) Date of publication and mention of the grant of the patent: **23.05.2012**
(21) Application number: 08760217.3
(22) Date of filing: 29.05.2008
(51) Int. Cl.: G05D 16/06

(54) **GAS PRESSURE REGULATOR HAVING A SWITCHING SHAFT WITH AN INTEGRATED PRESSURE GAUGE**
GASDRUCKREGLER MIT SCHALTWELLE MIT INTEGRIERTEM DRUCKMESSER
RÉGULATEUR DE PRESSION DE GAZ AYANT UN ARBRE DE COMMUTATION AVEC UNE JAUGE DE PRESSION INTÉGRÉE

(30) Priority: 01.06.2007 GB 0710399
(43) Date of publication of application: 17.02.2010
(73) Proprietor: LUXEMBOURG PATENT COMPANY S.A., 7440 Lintgen (LU)
(72) Inventor: WEINERT, Ingo, 35274 Kirchhain (DE); PINGER, Sascha, 25582 Wetzlar (DE)
(74) Representative: Lecomte, Didier
(86) International application number: PCT/EP2008/056626
(87) International publication number: WO 2008/145700

(56) References cited:
- EP-A1- 1 522 774
- US-A1- 2006 102 236
- US-B1- 6 182 692

## Description

### FIELD OF THE INVENTION

The invention relates to a gas pressure regulator comprising a housing, a switching shaft for controlling admission of high pressure gas from a gas container, such as a liquefied gas container, into said regulator housing, said gas pressure regulator having a high pressure side and a low pressure side, and further comprising a pressure gauge in fluid communication with the high pressure side.

A gas pressure regulator of this type is especially needed for a gas container, such as a gas cylinder, filled with liquefied gas under pressure, such as propane, butane or a mixture thereof. The regulator serves to reduce the container pressure to a lower pressure appropriate for a consumer device supplied with gas from the gas container. The switching shaft actuates an inlet valve to switch the gas pressure regulator on or off.

The pressure gauge is needed for checking or controlling the tightness of the liquefied gas container and related structures, such as gas lines, etc.. For controlling the tightness the inlet valve and the gas pressure regulator are opened and all consumer devices are closed. The pressure gauge now indicates the gas cylinder pressure. Thereafter the valve of the gas container is closed and the time is measured until the pointer of the pressure gauge moves to indicate a pressure reduction. A quick motion of the pointer indicates leakage in the system.

Patent document US 6,182,692 B2 discloses a gas pressure regulator in accordance with the preamble of claim 1.

Patent documents EP 1 522 774 A1 and US 2006/0102236 A1 disclose a valve for pressurized gas where a knob for opening and closing the valve includes a pressure gauge indicative of the outlet pressure of the valve.

### SUMMARY OF THE INVENTION

In the prior art the pressure gauge requires additional connections for mounting the pressure gauge thereby increasing complexity and possibilities for leakage. In accordance with the invention, to avoid these drawbacks, it is provided a gas pressure regulator according to claim 1.

Preferably, an annular actuating knob is mounted on the switching shaft to surround a portion thereof and form a unitary modular unit comprising the shaft and knob. After assembly of the switching shaft and actuating knob relative axial or rotational movement of the shaft and knob with respect to one another is no longer possible and the engagement between the shaft and the knob can no longer be released without destruction. Preferably, the actuating knob is fixed to the switching shaft by a quick connect snap coupling means and the knob and shaft have complemental mating engagement surfaces formed to permit engagement thereof in only one predetermined angular or rotational orientation of the knob relative to the shaft. The snap coupling means, when engaged, prevents relative axial movement between the shaft and knob and the engagement surfaces, when engaged, prevent relative rotational movement between the shaft and the knob.

A portion of the shaft extends from the actuating knob and is received in a bore of the gas pressure regulator housing. This shaft portion has at the free end portion thereof an eccentric for actuating the inlet valve of the gas pressure regulator. The switching shaft is metallic and consists for example of brass and the actuating knob is formed of plastic material. However, it would also be possible for the switching shaft and actuating knob to consist of one single piece formed for example of Zamak.

In case certain parameters, such as temperature or composition of the liquefied gas (or the gas mixture) are maintained constant the pressure gauge can provide an indication of the gas reserve remaining in the gas container when there is no more liquefied gas in the container but exclusively gas in the gaseous state. When this occurs there is a linear relationship between the pressure in the gas container and the gas reserve in the container. Generally, the pressure gauge has means for indicating the remaining gas reserve in the gas container responsive to the measured gas pressure. In accordance with a preferred embodiment, the pressure gauge has a modified scale to indicate the remaining gas reserve in the container, instead of the container pressure. The scale may be formed to indicate the remaining gas reserve in the container at different ambient temperatures (hot day or cold day).

Further, the pressure gauge has a pointer which may be formed of magnetic material or may have a magnet fixed thereto for actuation of a Hall sensor converting the pointer position in an electric output signal for remote gas reserve indication by wireless or wire-bound transmission. Instead of using a Hall sensor, a potentiometer can be provided to produce the output signal.

A latch lever is pivotably mounted on the housing of the gas pressure regulator and is urged by a spring into a rest position. The actuating knob is provided with a small or low height arrestment or stop cam engagable with a corresponding shallow arrestment or stop recess on the latch lever to releasably retain the actuating knob in an angular or rotational position corresponding to an open position of the inlet valve when the arrestment or stop elements consisting of the cam and recess are engaged. In a rotational position of the actuating knob and switching shaft corresponding to a valve off position the latch lever is pivotable against the spring force towards the actuating knob so that an upwardly extending projection of the latch lever extends through a radial opening of the actuating knob into a cut-out of the switching shaft to selectively retain the knob-switching shaft unit in a valve off or closed position.

### SHORT DESCRIPTION OF THE DRAWINGS

A preferred embodiment of the invention will now be described in greater detail with reference to the annexed drawings, wherein:
Figure 1 is sectional view of the gas pressure regulator.
Figure 2 is a side view of the gas pressure regulator showing the pressure gauge.
Figure 3 is a longitudinal cross-sectional view of the modular unit comprising the switching shaft and the actuating knob.
Figure 4 is a side view of the modular unit comprising the switching shaft and the actuating knob.
Figure 5 is another side view of the modular unit comprising the switching shaft and the actuating knob.
Figure 6 is an end view of the modular unit of figures 4 and 5 and showing the pressure gauge.
Figure 7A and 7B are different side views of the switching shaft.
Figure 8 is a longitudinal sectional view of the switching shaft without the pressure gauge.
Figure 9 is a partial view and at an enlarged scale of the switching shaft in the direction of the arrow X of figure 7A.
Figure 10 is a cross-sectional view of the switching shaft taken along the line A-A of figure 7A.
Figures 11-15 show the actuating knob, figure 11 being a side view, figure 12 a longitudinal sectional view, figure 13 a right side view of figure 12, figure 14 a left side view of figure 12 and figure 15 a cross-sectional view taken along the line A-A of figure 11.

### DESCRIPTION OF THE PREFERRED EMBODIMENT

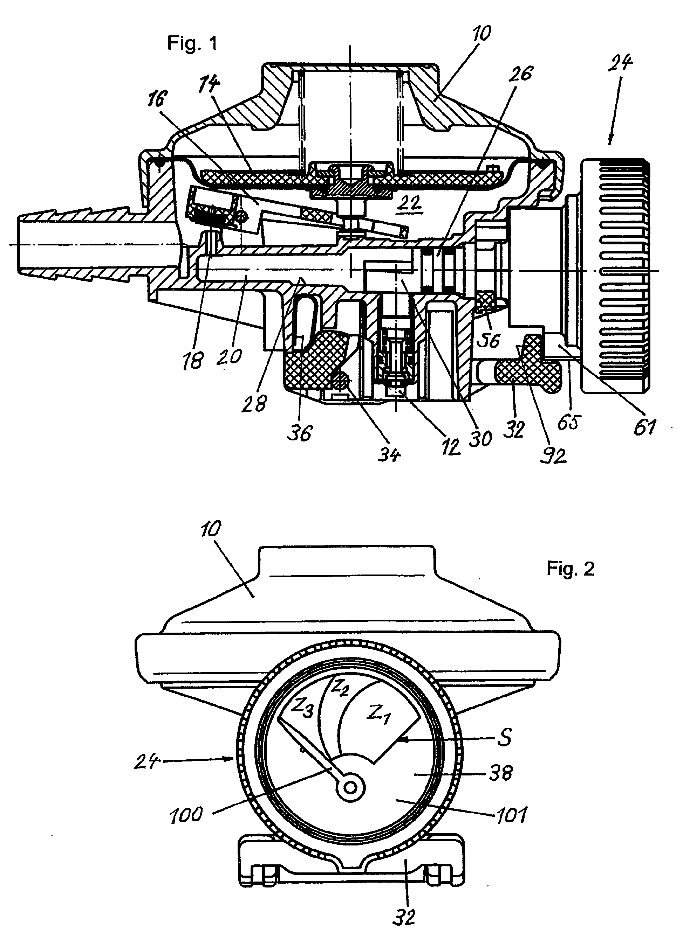

The gas pressure regulator or reducer shown in figures 1 and 2 comprises a housing or body 10. An on/off or inlet valve 12, a spring loaded diaphragm assembly 14 coupled to a pivotably mounted lever 16 cooperating with an orifice 18 formed in the housing 10 between a high pressure side 20 and a low pressure side 22 of the gas pressure reducer or regulator, and a unitary modular switching unit 24 rotatably mounted to the housing or body 10 for rotation between a first angular or rotational position in which valve 12 is open and a second angular or rotational position in which valve 12 is closed. The modular switching unit 24 to be described later in greater detail has a one-piece switching shaft 26 rotatably mounted within a transverse bore 28 of the regulator housing or body 10 and is provided with an eccentric 30 for actuating the valve 12.

A latch lever 32 is pivotably mounted by means of a pin 34 on a lower end portion of the housing or body 10 and a spring 36 urges the latch lever 32 to a horizontal rest position shown in figure 1. A pressure gauge 38, shown in figure 2, is integrated in the switching shaft 26, as will be described later in greater detail.

The latch lever 32 is also designed to selectively releasably retain the modular switching unit 24 in the valve closed position as will also be described later in greater detail.

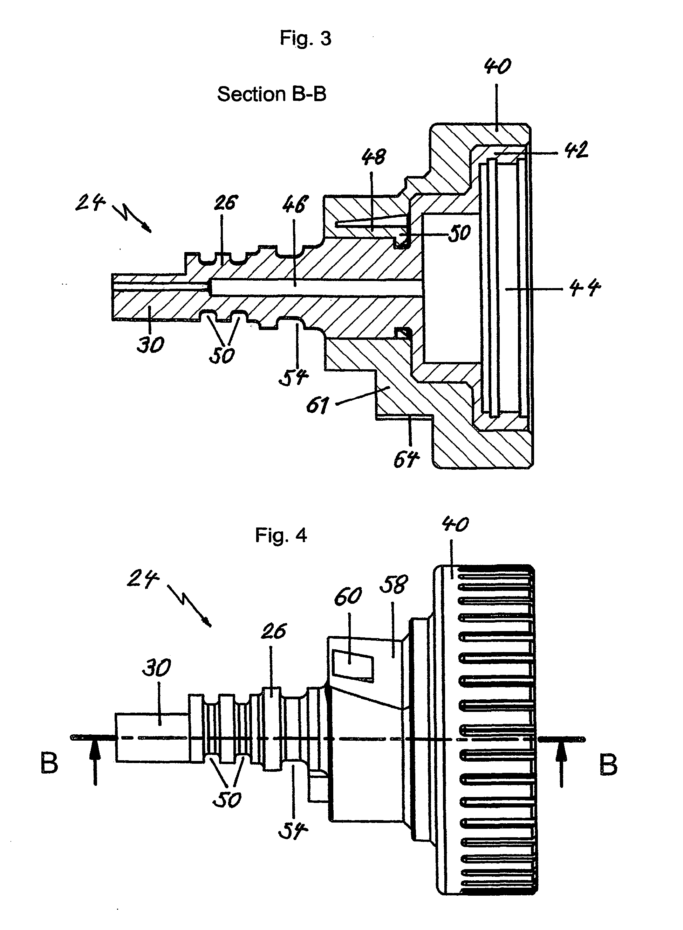

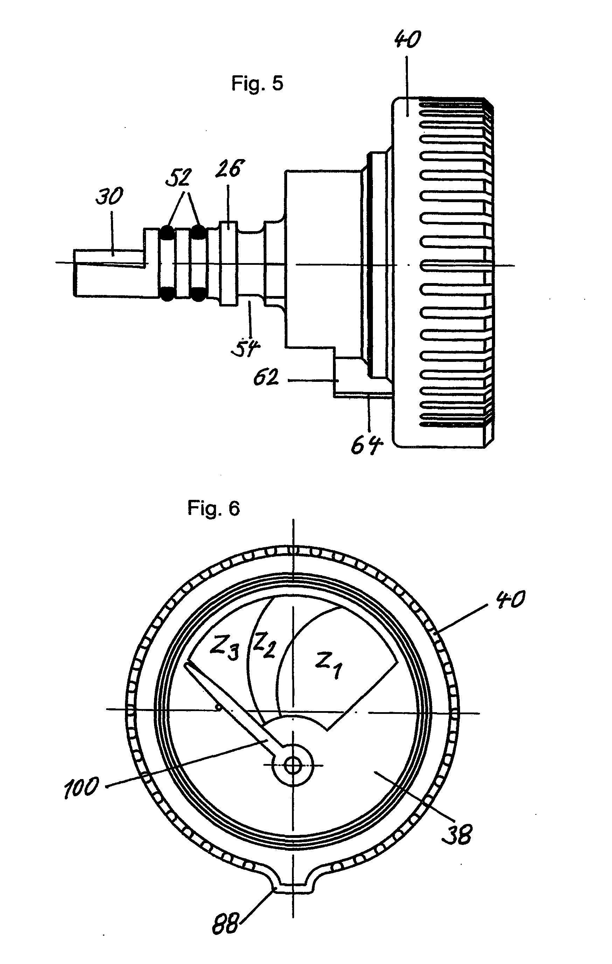

Reference will now be made to figures 3, 4, 5 and 6 which show the integral modular switching unit 24 comprising the switching shaft 26 and an annular actuating knob 40 mounted on the switching shaft 26 and surrounding a portion of the switching shaft 26. The actuating knob is mounted on a portion of the switching shaft 26 extending from the housing 10 and the pressure gauge 38 mounted in that portion of the switching shaft 26. The remaining portion of the switching shaft 26 extending from the actuating knob 40 is received and rotatably mounted in the housing or body bore 28, as shown in figure 1. The switching shaft 26 has at one end thereof a radially enlarged head portion 42 in which the pressure gauge 38 is tightly received to prevent gas leakage from within the pressure regulator housing 10 around the pressure gauge 38 to the environment. The pressure gauge 38 is not shown in figure 3 but is shown in figure 6. At the other end of the switching shaft 26 there is provided the eccentric 30 for actuating the inlet valve 12. The pressure gauge 38 is seated in a cavity 44 of the enlarged head portion 42 and the cavity is, by means of a longitudinal gas passage 46 formed in the shaft 26, in fluid communication with the interior of the bore 28 of the housing or body 10 for placing the cavity 44 behind the pressure gauge 38 in communication with the high side pressure 20 in bore 28 of the housing or body 10.

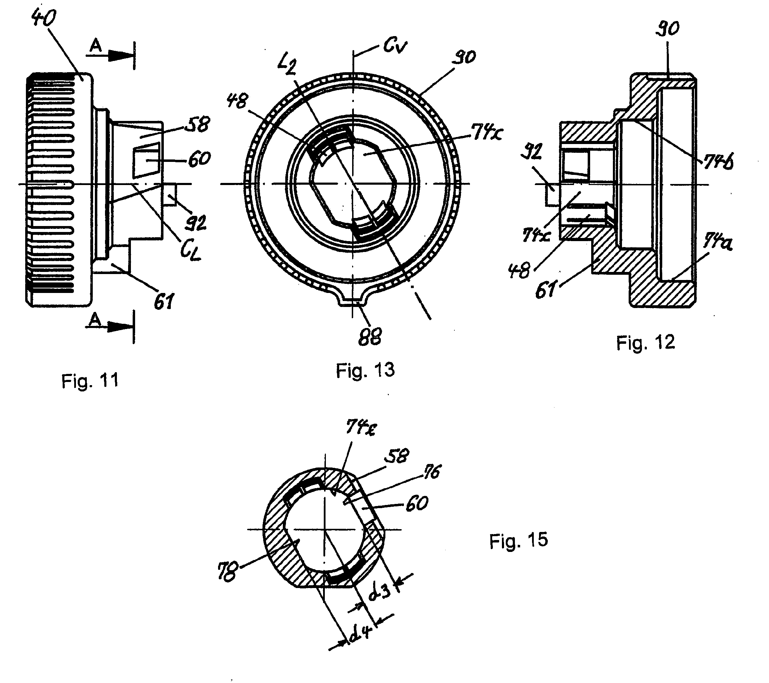

The portion of the switching shaft 46 including the enlarged head portion 42 surrounded by the actuating knob 40 has three portions or collars 62a, 62b, 62c of different external diameters received in three associated portions 74a, 74b, 74c of the actuating knob 40 having corresponding different internal diameters. The actuating knob 40 has in the portion 74c with the smallest internal diameter at least one flexible locking arm 48, and preferably two, or most preferably four such locking arms 48, as will be described later with respect to figures 11-15. The locking arm 48 is integrally formed at one end thereof with the actuating knob 40 and has at its free end an inwardly projecting locking barb 50 received in a circumferential locking groove 51 formed between the smallest external diameter portion or collar 62c and the intermediate external diameter portion or collar 62b of the three different diameter portions or collars 62a, 62b, 62c of the switching shaft 26 surrounded by the actuating knob 40. The locking arm 48 extends from the end of the actuating knob 40 facing the eccentric 30 of the switching shaft 26 towards the enlarged diameter end 42 of the switching shaft 26 and is not accessible from the exterior when the switching shaft 26 and the actuating knob 40 are fitted or united together so that the modular switching unit 24 consisting of the shaft 26 and the knob 40 cannot be disassembled without destruction. The locking arm or arms 48 and the locking groove 51 from a quick connect snap coupling means preventing in the engaged condition relative axial movement between the shaft 26 and the knob 40.

It is further pointed out that the portion of the switching shaft 26 extending from the actuating knob 40 has two circumferential grooves 50 for receiving each a sealing ring 52, note figure 5, to ensure tight mounting of the switching shaft 26 in the housing 10 or body bore 28. Only a single seal ring groove 50 and a single seal ring 52 may suffice. Between the seal ring 52 and the smallest external diameter portion or collar 62c of the switching shaft 26 surrounded by the actuating knob 40 there is provided a further circumferential groove 54 in the portion of the switching shaft 26 extending from the actuating knob 40. This groove 54 is a retaining groove adapted to receive a retention member or clip 56 attached to the housing or body 10 to secure the modular actuating unit 24 to the housing 10 against axial movement while allowing rotational movement of the modular switching unit 24 relative to the housing 10.

The three portions 74a, 74b, 74c of the actuating knob 40 have also three different external diameters on the outer knob circumference. The portion 74a having the largest internal diameter also having the largest external diameter, the portion 74b having the intermediate internal diameter also having the intermediate external diameter, and the portion 74c having the smallest internal and external diameters. The portion 74c of the actuating knob 40 having the smallest internal and external diameters further has an outer flat inclined surface 58 on its outer diameter and a radial opening 60 is formed through portion 74c, as shown in figure 4, for a purpose to be described later. Further, the actuating knob 40 has a radial external projection 61 provided with a small or low height arrestment or stop cam 63 engageable in a complemental shallow arrestment or stop recess 65 on the latch lever 32, note figure 1, to releasably retain the modular switching unit 24 in an angular or rotational position corresponding to an open position of the inlet valve 12, when the arrestment or stop cam 63 and recess 65 of the actuating knob 40 and latch lever 32, respectively, are engaged with one another.

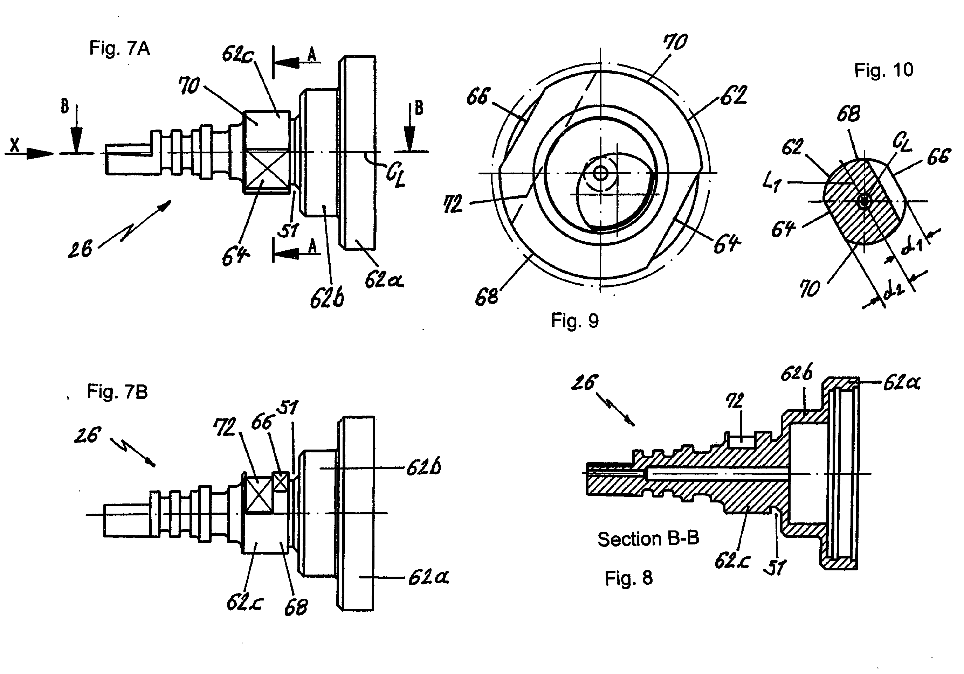

The switching shaft 26 will now be further described with reference to figures 7A, 7B, 8, 9 and 10. The smallest external diameter portion or collar 62c of the switching shaft 26 surrounded by the actuating member 40 is provided with two flat circumferentially spaced and diametrically opposite surface portions 64 and 66 interconnected by two flat circumferentially spaced and diametrically opposite curved or arcuate surface portions 68 and 70. The flat surface portions 64 and 66 are parallel to a transverse or radial line L₁ intersecting the longitudinal center line C_{L} of the switch shaft 26 and are provided on opposite sides of this transverse line L₁ at different radial distances d₁, d₂ therefrom, the flat surface portion 66 being at a greater radial distance from the transverse line L₁ than the flat surface portion 64. Further, a transverse cut-out or groove 72 is formed in the smallest diameter portion or collar 62c of the switching shaft 26 surrounded by the actuating knob 40. The transverse cut-out or groove 72 is formed in the flat surface portion 66 spaced a greater distance from line L₁ and is parallel to this surface portion 66. The purpose of this groove 72 will be described later.

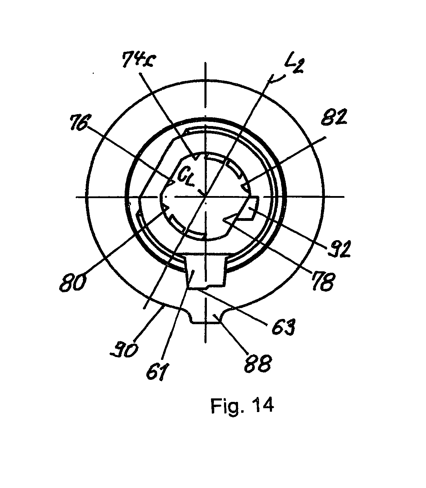

The actuating knob 40 will now be described in greater detail with reference to figures 11-15. As already described earlier, the actuating knob 40 has three different internal diameter portions 74a, 74b, 74c corresponding to the three different external diameter portions or collars 62a, 62b, 62c of the switching shaft 26. The smallest internal diameter portion 74c has two flat circumferentially spaced and diametrically opposite inner surface portions 76 and 78 interconnected by two intermediate, circumferentially spaced and diametrically opposite curved or arcuate surface portions 80 and 82. The curved or arcuate surface portions 68 and 70 of the switching shaft 26 correspond in diameter to or are slightly smaller in diameter than the curved or arcuate surface portions 80 and 82 of knob 40, and the flat inner surface portions 76 and 78 are spaced at different radial distances d₃, d₄ from a transverse or radial line L₂ intersecting the longitudinal axis C_{L} of knob 40. The flat inner surface portion 76 is at the same or a slightly larger radial distance d₃ from the radial line L₂ as is the radial distance d₁ of the flat surface portion 66 of the switching shaft 26 from the radial line L₁; and the flat inner surface portion 78 of knob 40 is at the same radial distance d₄ or a slightly larger distance from the radial line L₂ of knob 40 as is the radial distance d₂ of the flat surface 64 of switching shaft 26 from the radial line L₁, to ensure that the switching shaft 26 and the actuating knob 40 can only be fitted or interconnected at one predetermined angular or rotational position relative to one another. As can also be seen from figures 13 and 14 the radial line L₂ to which the flat surface portions 78 and 76 are parallel is inclined at an angle of about 30 degrees relative to a vertical center line Cᵥ of the actuating knob 40 passing through a lower boss 88 provided on the external surface 90 of the largest diameter portion 74a of knob 40. This boss 88 is circumferentially aligned with radial projection 61, note figure 14, provided with the arrestment or locking surface 64, already described with reference to figure 5.

The radial line L₁ to which the flat surface portions 64, 66 of the switching shaft 26 are parallel is also inclined at an angle of about 30° to the vertical centerline Cv of the switching shaft, as shown in figure 10. From the preceding description it can be understood that the flat and curved surface portions 64, 66, 68, 70 of the switching shaft 26 and the flat and curved surface portions 76, 78, 80, 82 of the actuating knob 40 form complemental mating engagement surfaces on the shaft 26 and knob 40 allowing interengagement of the shaft and knob in only one predetermined angular orientation of the knob relative to the shaft and preventing, when engaged, relative rotation between the knob 40 and shaft 26.

From figures 12-15 it can also be seen that the actuating knob 40 has four locking arms 48 arranged in two diametrically opposite groups with one arm of each group being on one side of the radial line L₂ and the other arm of each group being on the other side of radial line L₂ to which the flat surface portion 76 and 78 of knob 40 are parallel. In other words, one pair of the flexible arms 48 is located in one of the curved or arcuate inner surface portions 80 and 82 and the other pair of flexible arms 48 is in the other curved or arcuate inner surface portion. Instead of the four locking arms 48 there may be only two diametrically opposite locking arms 48, one on each surface portion 80, 82.

Figure 11 also shows the outer inclined flat surface portion 58 and the opening 60 formed the small diameter portion 74c of knob 40. When the knob 40 is fitted on the switching shaft 26 the opening 60 in flat surface 58 is aligned with the radial slot 72 of switching shaft 26, and when the unitary switching module or unit 24 is in an angular or rotational position corresponding to the closed position of inlet valve 12, the opening 60 and slot 72 are oriented downwardly so that an upwardly extending portion 92 of the latch lever 32 (note figure 1) can be received in opening 60 and slot 72 by upward pivot motion of latch lever 32 against the force of spring 36 to selectively and temporarily retain the unitary switching module or unit 24 in a valve 12 closed position to avoid undesired gas discharge when the pressure reducer or regulator is being mounted on a gas container valve. No such upward pivot motion of the latch lever 32 is possible when the arrestment or stop cam 63 and recess 65 of the knob projection 61 and the lever 32, respectively, are in engagement or when the arrestment or stop cam 63 and recess 65 are not in engagement but the upward projection 92 of the latch lever 32 is not aligned with opening 60 and slot 72, i.e. when the switching unit 24 is not in the inlet valve 10 closed position.

Lastly, the smallest diameter portion 74c of a actuating knob 40 has an axial projection 92 to limit the rotational movement of the switching unit 24 in the valve 12 opening and closing direction in cooperating a stationary stop (not shown) fixed to the housing 10.

When switching unit 24 is turned to engage external projection 61 with the latch lever 32 this lever 32 is slightly elastically deflected downwardly by the arrestment cam 63 and then springs back upwardly when the arrestment cam 63 aligns with arrestment recess 65 of latch lever 32 to engage cam 63 in recess 65 and releasably engage the knob 40 and lever 32 thereby releasably holding the switching unit 24 in an angular position corresponding to the valve 12 open position.

Now, referring again to figures 2 and 6, the pressure gauge 38 has an indicator or pivotable pointer 100 and a dial 101 having a scale S graduated to represent a remaining gas reserve in the gas container and provided with a plurality, preferably three, scale zones which may be differently colored. For example a right green zone Z₁, an intermediate yellow zone Z₂ and a left red zone Z₃. When the pointer 100 is in the right green zone Z₁ there is still plenty of gas reserve left in the gas container. The intermediate yellow zone Z₂ is an early warning zone of low gas reserve in the gas cylinder and the right red zone Z₃ indicates that there is only a reserve of 20-25 minutes in the gas cylinder and refilling is necessary as soon as possible. Further, the dial 101 is designed so that the remaining gas reserve can be read for different ambient temperatures. For this purpose the boundaries between the zones Z₁ and Z₂ and between the zones Z₂ and zones Z₃ are curved, arcuate or spirally-shaped, When the ambient temperature is between 25 and 35 degrees Celsius the upper or outer scale part for a "hot day" should be read. If the ambient temperature is between 15 and 25 degrees Celsius the lower or inner scale part for a "cold day" is to be read.

Instead of the differently colored zones, lights (not shown) can be provided blinking for example green, yellow or red to indicate sufficient gas reserve, to provide an early warning of low gas reserve, or to indicate necessity for refilling, respectively. Alternatively, the zones Z₁, Z₂, Z₃ may be electrically illuminated to indicate the three conditions, or LEDs (not shown) can be used to provide the three indications.

Finally, it is pointed out that the pointer 100 or other movable element of the pressure gauge 38 may be magnetic or may have a magnet (not shown) fixed thereto for actuation of a Hall-sensor (not shown) converting the position of the pointer or other movable element in an electric output signal representing the measured gas pressure for remote gas reserve indication. Other techniques may be used for remote gas reserve indication such as a potentiometer. The remote gas indication may be wireless or wire-bound.

In the particular embodiment described therein the gas pressure regulator has an inlet valve 12 actuatable by the switching shaft 26. However, in more general terms the regulator merely has a stem actuatable by the switching shaft for opening a gas container valve via the stem. If for additional safety reasons the stem is provided with a seal means, this stem and seal means is referred to as an "inlet valve" as referred to hereinbefore.

Although a preferred embodiment of the regulator has been described in detail, it is to be understood that various variations or modifications can be made thereto without departure from the scope of the invention as defined by the annexed claims.

## Claims

1. Gas pressure regulator comprising a housing (10), a high pressure side and a low pressure side, an inlet valve (12) and further comprising a pressure gauge (38) in fluid communication with the high pressure side; **characterized in that** it comprises a switching shaft (26) with an eccentric portion (30) suitable for actuating 4 the inlet valve (12) and controlling admission of high pressure gas from a gas container into said regulator housing (10) and **in that** said pressure gauge (38) is integrated in said switching shaft (26).

2. Gas pressure regulator according to claim 1, wherein the switching shaft (26) has at one end thereof a cavity (44) therein in which the pressure gauge (38) is mounted, a passage (46) extending through the switching shaft (26) from the cavity (44) to the other end of the switching shaft and opening out at said other end for placing the cavity (44) in fluid communication with said high pressure side of the regulator.

3. Gas pressure regulator according to claim 1 or 2 , wherein an annular actuating knob (40) is fixed to the switching shaft (26) as to form a unitary modular switching unit (24) comprising said shaft (26) and said knob (40) and wherein, preferably, the actuating knob (40) is a snap-on member quickly engageable with the switching shaft.

4. Gas pressure regulator according to claim 3, wherein the actuating knob (40) is fixed to the switching shaft (26) by a quick connect snap coupling means (48, 50, 51), said coupling means (48, 50, 51) being engageable in only one angular position of the actuating knob (40) relative to the shaft (26) and in an engaged condition preventing relative axial movement between the shaft (26) and the knob (40) and, preferably wherein the quick connect snap coupling means (48, 50, 51) is entirely disposed within the actuating knob (40) so as to be unaccessible in an engaged state whereby the actuating knob (40) and switching shaft (26) when engaged cannot be separated from one another without destruction.

5. Gas pressure regulator according to any one of claims 3 to 4, wherein the actuating knob (40) and the switching shaft (26) have complemental mating engagement surfaces shaped to allow interengagement of the knob and shaft in only one predetermined angular orientation of the knob relative to the shaft and preventing relative rotation between the knob and shaft in an engaged condition of said surfaces and wherein the mating engagement surfaces on each of the shaft and knob preferably comprise circumferentially spaced curved or arcuate surface portions and intermediate flat surface portions parallel to one another and interconnecting the curved or arcuate surface portions, the flat surface portions being disposed at different distances from a longitudinal center line of the modular switching unit.

6. Gas pressure regulator according to claim 4, wherein the quick connect snap coupling means comprises at least one, and preferably at least two, flexible locking arms integrally formed at one end thereof with said actuating knob and having at a free end thereof an inwardly projecting locking barb received in a locking groove of the switching shaft.

7. Gas pressure regulator according to claim 5, wherein the actuating knob (40) has four locking arms (48) arranged in two diametrically opposite pairs.

8. Gas pressure regulator according to claim 4, wherein the actuating knob (40) and switching shaft (26) have complemental mating engagement surfaces, each of the shaft (26) and knob (40) engagement surfaces having circumferentially spaced arcuate surface portions (68, 70; 80, 82) and intermediate flat surface portions (64, 66; 76, 78) interconnecting the curved or arcuate surface portions (68, 70; 80, 82), and the quick connect snap coupling means comprises at least two diametrically opposite locking arms (48) arranged in the curved or arcuate surface portions (80, 82) of the actuating knob engagement surface and, preferably wherein the mating engagement surfaces are shaped to allow interconnection of the knob and shaft in only one predetermined angular or rotational orientation of the knob relative to the shaft and prevent relative rotation between the knob and shaft in an engaged condition of said surfaces.

9. Gas pressure regulator according to any one of claims 1 to 9, wherein the switching shaft (26) has at least one and preferably two sealing ring grooves (50).

10. Gas pressure regulator according to any one of claims 1 to 10, wherein the switching shaft (26) has a retaining groove (54), and a stationary retention (56) is partly received in said retaining groove.

11. Gas pressure regulator according to claim 3 , wherein a latch lever (32) is mounted on said regulator housing (10) and cooperating arrestment or stop elements (63) are formed on the actuating knob (40) and the latch lever (32) to releasably arrest, when engaged, the modular switching unit (24) in a first angular or rotational position corresponding to an open position of a valve actuating stem (12).

12. Gas pressure regulator according to claim 12, wherein the latch lever (32) is pivotably mounted on said regulator housing (10) and retained by spring force in a rest position to permit engagement of the arrestment or stop elements (63), said latch lever (32) being upwardly pivotable when said integral modular switching unit (24) is in a second angular or rotational position corresponding to a closed position of the valve actuating stem (12), to engage and retain said switching unit (24) in said second position.

13. Gas pressure regulator according to any one of claims 1 to 13, wherein the pressure gauge (38) is provided with means for indicating the remaining gas reserve in the gas container responsive to the measured gas pressure and wherein the pressure gauge has means for generating an output signal in response to the measured gas pressure for remote indication of the remaining gas reserve by wireless or wire- bound transmission.

14. Gas pressure regulator according to claim 14, wherein the pressure gauge (38) has a scale graduated to represent the remaining gas reserve in the gas container and an indicator movable relative to the scale and wherein said scale has a plurality, more preferably three scale zones, a first providing an indication of sufficient gas reserve in the container, a second providing an early warning of low gas content in the container, and a third providing an indication of the need to refill the container, the scale being preferably designed to indicate the remaining gas reserve in the gas container at different ambient temperatures.

## Patentansprüche

1. Gasdruckregler, umfassend ein Gehäuse (10), eine Hochdruckseite und eine Niederdruckseite, ein Einlassventil (12), und außerdem umfassend einen Druckmesser (38) in Fluidverbindung mit der Hochdruckseite; **dadurch gekennzeichnet, dass** er eine Umschaltwelle (26) mit einem Exzenterteil (30) umfasst, die für das Betätigen des Einlassventils (12) und das Steuern der Zufuhr von Hochdruckgas aus einem Gasbehälter in das Reglergehäuse (10) geeignet ist, und dass der Druckmesser (38) in die Umschaltwelle (26) integriert ist.

2. Gasdruckregler nach Anspruch 1, bei dem die Umschaltwelle (26) an einem Ende derselben einen darin befindlichen Hohlraum (44) aufweist, in dem der Druckmesser (38) eingebaut ist, wobei ein Kanal (46) sich durch die Umschaltwelle (26) vom Hohlraum (44) aus zum anderen Ende der Umschaltwelle erstreckt und sich an dem anderen Ende öffnet, um den Hohlraum (44) mit der Hochdruckseite des Reglers in Fluidverbindung zu bringen.

3. Gasdruckregler nach Anspruch 1 oder 2, bei dem ein ringförmiger Betätigungsknopf (40) an der Umschaltwelle (26) befestigt ist, um eine einheitliche modulare Umschalteinheit (24) zu bilden, die die Welle (26) und den Knopf (40) umfasst und bei der, vorzugsweise, der Betätigungsknopf (40) ein Aufrastelement ist, das sich an der Umschaltwelle schnell in Eingriff bringen lässt.

4. Gasdruckregler nach Anspruch 3, bei dem der Betätigungsknopf (40) durch ein Schnellverbindungs-Rastkopplungsmittel (48, 50, 51) an der Umschaltwelle (26) befestigt wird, wobei das Kopplungsmittel (48, 50, 51) sich nur in einer Winkelstellung des Betätigungsknopfes (40) in Bezug auf die Welle (26) in Eingriff bringen lässt und in einem Eingriffszustand die axiale Relativbewegung zwischen der Welle (26) und dem Knopf (40) verhindert und wobei, vorzugsweise, das Schnellverbindungs-Rastkopplungsmittel (48, 50, 51) vollständig in dem Betätigungsknopf (40) angeordnet ist, damit es in einem Eingriffszustand unzugänglich ist, wodurch der Betätigungsknopf (40) und die Umschaltwelle (26) bei Eingriff nicht ohne Zerstörung voneinander getrennt werden können.

5. Gasdruckregler nach einem der Ansprüche 3 bis 4, bei dem der Betätigungsknopf (40) und die Umschaltwelle (26) komplementäre Paarungseingriffsflächen aufweisen, die so geformt sind, dass sie den Eingriff des Knopfes und der Welle in nur einer vorgegebenen Winkelorientierung des Knopfes in Bezug auf die Welle ermöglichen und die Relativdrehung zwischen dem Knopf und der Welle in einem Eingriffszustand der Flächen verhindern und wobei die Paarungseingriffsflächen sowohl an der Welle als auch am Knopf vorzugsweise in Umfangsrichtung voneinander beabstandete, gekrümmte oder bogenförmige Flächenteile und dazwischenliegende flache Flächenteile, die zueinander parallel sind und die gekrümmten oder bogenförmigen Flächenteile miteinander verbinden, umfassen, wobei die flachen Flächenteile in unterschiedlichen Abständen von einer Längsmittelachse der modularen Umschalteinheit angeordnet sind.

6. Gasdruckregler nach Anspruch 4, bei dem das Schnellverbindungs-Rastkopplungsmittel mindestens einen, und vorzugsweise mindestens zwei, biegsame Rastarme umfasst, die an einem Ende derselben mit dem Betätigungsknopf einstückig geformt sind und an einem freien Ende derselben einen nach innen hervorstehenden Rastwiderhaken aufweisen, der in einer Arretierungsnut der Umschaltwelle aufgenommen wird.

7. Gasdruckregler nach Anspruch 5, bei dem der Betätigungsknopf (40) vier Rastarme (48) aufweist, die in zwei diametral gegenüberliegenden Paaren angeordnet sind.

8. Gasdruckregler nach Anspruch 4, bei dem der Betätigungsknopf (40) und die Umschaltwelle (26) komplementäre Paarungseingriffsflächen aufweisen, wobei die Eingriffsflächen der Welle (26) und die des Knopfes (40) in Umfangsrichtung voneinander beabstandete, bogenförmige Flächenteile (68, 70; 80, 82) und dazwischenliegende flache Flächenteile (64, 66; 76, 78), die die gekrümmten oder bogenförmigen Flächenteile (68, 70; 80, 82) miteinander verbinden, aufweisen, und das Schnellverbindungs-Rastkopplungsmittel mindestens zwei diametrial gegenüberliegende Rastarme (48) umfasst, die in den gekrümmten oder bogenförmigen Flächenteilen (80, 82) der Betätigungsknopf-Eingriffsfläche angeordnet sind, und wobei, vorzugsweise die Paarungseingriffsflächen so geformt sind, dass sie die Verbindung des Knopfes und der Welle in nur einer vorgegebenen Winkel- oder Drehorientierung des Knopfes in Bezug auf die Welle ermöglichen und die Relativdrehung zwischen dem Knopf und der Welle in einem Eingriffszustand der Flächen verhindern.

9. Gasdruckregler nach einem der Ansprüche 1 bis 9, bei dem die Umschaltwelle (26) mindestens eine und vorzugsweise zwei Dichtungsringnuten (50) aufweist.

10. Gasdruckregler nach einem der Ansprüche 1 bis 10, bei dem die Umschaltwelle (26) eine Sicherungsnut (54) und eine feststehende Arretierung (56) aufweist, die teilweise in der Sicherungsnut aufgenommen wird.

11. Gasdruckregler nach Anspruch 3, bei dem ein Einrasthebel (32) an dem Reglergehäuse (10) montiert ist und zusammenwirkende Arretierungs- oder Anschlagelemente (63) an dem Betätigungsknopf (40) und dem Einrasthebel (32) ausgebildet sind, um, bei Eingriff, die modulare Umschalteinheit (24) in einer ersten Winkel- oder Drehstellung, die einer offenen Stellung eines Ventilbetätigungsschaftes (12) entspricht, lösbar zu arretieren.

12. Gasdruckregler nach Anspruch 12, bei dem der Einrasthebel (32) an dem Reglergehäuse (10) schwenkbar angebracht ist und durch Federkraft in einer Ruhelage gehalten wird, um den Eingriff der Arretierungs- oder Anschlagelemente (63) zu gestatten, wobei sich der Einrasthebel (32) nach oben schwenken lässt, wenn sich die integrale modulare Umschalteinheit (24) in einer zweiten Winkel- oder Drehstellung befindet, die einer geschlossenen Stellung des Ventilbetätigungsschaftes (12) entspricht, um in die Umschalteinheit (24) in der zweiten Stellung einzugreifen und diese in derselben zu halten.

13. Gasdruckregler nach einem der Ansprüche 1 bis 13, bei dem der Druckmesser (38) mit Mitteln zum Anzeigen der verbleibenden Gasreserve im Gasbehälter bereitgestellt wird, die auf den gemessenen Gasdruck reagieren, und bei dem der Druckmesser Mittel zum Erzeugen eines Ausgangssignals als Reaktion auf den gemessenen Gasdruck für die Fernanzeige der verbleibenden Gasreserve durch drahtlose oder drahtgebundene Übertragung aufweist.

14. Gasdruckregler nach Anspruch 14, bei dem der Druckmesser (38) eine Skala mit Teilstrichen aufweist, um die verbleibende Gasreserve im Gasbehälter zu veranschaulichen, und einen Anzeiger, der in Bezug auf die Skala beweglich ist, und wobei die Skala eine Vielzahl von Skalenbereichen, besonders bevorzugt drei, aufweist, einen Ersten zum Bereitstellen einer Anzeige einer ausreichenden Gasreserve im Behälter, einen Zweiten zum Bereitstellen einer Frühwarnung eines niedrigen Gasgehaltes im Behälter, und einen Dritten zum Bereitstellen einer Anzeige der Notwendigkeit für das Auffüllen des Behälters, wobei die Skala vorzugsweise so gestaltet ist, dass die verbleibende Gasreserve im Gasbehälter bei verschiedenen Umgebungstemperatur angezeigt werden kann.

## Revendications

1. Régulateur de pression de gaz comprenant un boîtier (10), un côté haute pression et un côté basse pression, un clapet d'entrée (12) et comprenant en outre un indicateur de pression (38) mis en communication par fluide avec le côté haute pression, **caractérisé en ce qu'**il comprend un arbre de commutation (26) comportant une portion excentrique (30) appropriée pour actionner le clapet d'entrée (12) et pour régler l'admission d'un gaz haute pression à partir d'un récipient pour le gaz dans ledit boîtier de régulateur (10), et **en ce que** ledit indicateur de pression (38) est intégré dans ledit arbre de commutation (26).

2. Régulateur de pression de gaz selon la revendication 1, dans lequel l'arbre de commutation (26) possède, à une de ses extrémités, une cavité (44) dans laquelle est monté l'indicateur de pression (38), un passage (46) s'étendant à travers l'arbre de commutation (26) à partir de la cavité (44) jusqu'à l'autre extrémité de l'arbre de commutation et s'ouvrant à ladite autre extrémité pour mettre la cavité (44) en communication par fluide avec ledit côté haute pression du régulateur.

3. Régulateur de pression de gaz selon la revendication 1 ou 2, dans lequel un bouton d'actionnement annulaire (40) est fixé à l'arbre de commutation (26) de façon à obtenir une unité de commutation modulaire unitaire (24) comprenant ledit arbre (26) et ledit bouton (40) et, dans lequel, de préférence, le bouton d'actionnement (40) est un membre encliquetable qui peut venir se mettre rapidement en prise avec l'arbre de commutation.

4. Régulateur de pression de gaz selon la revendication 3, dans lequel le bouton d'actionnement (40) est fixé à l'arbre de commutation (26) via un moyen d'accouplement sous la forme d'un raccord symétrique (48, 50, 51), ledit moyen d'accouplement (48, 50, 51) pouvant être mis en prise dans une seule position angulaire du bouton d'actionnement (40) par rapport à l'arbre (26) et, à l'état de mise en prise, empêchant un mouvement axial relatif entre l'arbre (26) et le bouton (40) et de préférence, dans lequel le moyen d'accouplement sous la forme d'un raccord symétrique (48, 50, 51) est disposé entièrement au sein du bouton d'actionnement (40) de façon à être inaccessible à l'état de mise en prise, si bien que le bouton d'actionnement (40) et l'arbre de commutation (26) lorsqu'ils sont en prise ne peuvent être séparés l'un de l'autre sans être détruits.

5. Régulateur de pression de gaz selon l'une quelconque des revendications 3 à 4, dans lequel le bouton d'actionnement (40) et l'arbre de commutation (26) possèdent des surfaces complémentaires de mise en prise par contact, configurées pour permettre une mise en prise réciproque du bouton et de l'arbre dans une seule orientation angulaire prédéterminée du bouton par rapport à l'arbre et empêchant une rotation relative entre le bouton et l'arbre à l'état de mise en prise de ladite surface, et dans lequel les surfaces de mise en prise par contact sur respectivement l'arbre et le bouton comprennent de préférence des portions de surface courbes ou arquées, espacées en direction circonférentielle et des portions intermédiaires de surfaces plates parallèles les unes aux autres et reliant les unes aux autres les portions de surfaces courbes ou arquées, les portions de surfaces plates étant disposées à des distances différentes par rapport à la médiane longitudinale de l'unité de commutation modulaire.

6. Régulateur de pression de gaz selon la revendication 4, dans lequel le moyen d'accouplement sous la forme d'un raccord symétrique comprend au moins un, et de préférence au moins deux bras de verrouillage flexibles réalisés en une seule pièce à une de ses extrémités avec ledit bouton d'actionnement, et possédant, à son extrémité libre, une barbe de verrouillage faisant saillie vers l'intérieur qui vient se loger dans une rainure de verrouillage de l'arbre de commutation.

7. Régulateur de pression de gaz selon la revendication 5, dans lequel le bouton d'actionnement (40) possède quatre bras de verrouillage (48) qui sont arrangés sous la forme de deux paires diamétralement opposées.

8. Régulateur de pression de gaz selon la revendication 4, dans lequel le bouton d'actionnement (40) et l'arbre de commutation (26) possèdent des surfaces complémentaires de mise en prise par contact, chacune des surfaces de mise en prise de l'arbre (26) et du bouton (40) possédant des portions de surfaces arquées, espacées en direction circonférentielle (68, 70 ; 80, 82) et des portions intermédiaires de surfaces plates (64, 66 ; 76, 78) reliant les unes aux autres les portions de surfaces courbes ou arquées (68, 70 ; 80, 82), et le moyen d'accouplement sous la forme d'un raccord symétrique comprenant au moins deux bras de verrouillage (48) diamétralement opposés qui sont arrangés dans les portions de surfaces courbes ou arquées (80, 82) de la surface de mise en prise du bouton d'actionnement, et de préférence dans lequel les surfaces de mise en prise par contact sont configurées pour permettre une interconnexion du bouton et de l'arbre dans une seule orientation angulaire ou en rotation prédéterminée du bouton par rapport à l'arbre et pour empêcher la rotation relative entre le bouton et l'arbre à l'état de mise en prise desdites surfaces.

9. Régulateur de pression de gaz selon l'une quelconque des revendications 1 à 8, dans lequel l'arbre de commutation (26) possède au moins une et de préférence deux rainures annulaires d'étanchéité (50).

10. Régulateur de pression de gaz selon l'une quelconque des revendications 1 à 9, dans lequel l'arbre de commutation (26) possède une rainure de retenue (54), une rétention stationnaire (56) ayant lieu en partie dans ladite rainure de retenue.

11. Régulateur de pression de gaz selon la revendication 3, dans lequel un levier de verrouillage (32) est monté sur ledit boîtier de régulateur (10) et des éléments coopérants de blocage ou d'arrêt (63) sont réalisés sur le bouton d'actionnement (40) et le levier de verrouillage (32) pour arrêter de manière amovible, lors de la mise en prise, l'unité de commutation modulaire (24) dans une première position angulaire ou de rotation correspondant à la position ouverte d'une tige (12) d'actionnement de clapet.

12. Régulateur de pression de gaz selon la revendication 11, dans lequel le levier de verrouillage (32) est monté en pivotement sur ledit boîtier de régulateur (10) et est retenu par la force d'un ressort dans une position de repos pour permettre la mise en prise des éléments de blocage ou d'arrêt (63), ledit levier de verrouillage (32) étant à même de pivoter vers le haut lorsque ladite unité de commutation modulaire intégrée (26) se trouve dans une deuxième position angulaire ou en rotation correspondant à la position fermée de la tige (12) d'actionnement de clapet, pour la mise en prise et la retenue de ladite unité de commutation (24) dans ladite deuxième position.

13. Régulateur de pression de gaz selon l'une quelconque des revendications 1 à 12, dans lequel l'indicateur de pression (38) est muni d'un moyen pour indiquer la réserve de gaz résiduel dans le récipient pour le gaz en réponse à la pression de gaz mesurée, et dans lequel l'indicateur de pression possède un moyen pour générer un signal de sortie en réponse à la pression de gaz mesurée pour une indication à distance de la réserve de gaz résiduel par transmission sans fil ou câblée.

14. Régulateur de pression de gaz selon la revendication 13, dans lequel l'indicateur de pression (38) possède une échelle graduée pour représenter la réserve de gaz résiduel dans le récipient pour le gaz et un dispositif d'indication mobile par rapport à l'échelle, et dans lequel ladite échelle possède plusieurs zones, de manière plus préférée trois zones d'échelle, une première procurant une indication d'une réserve de gaz suffisante dans le récipient, une deuxième procurant un avertissement précoce d'une faible teneur en gaz dans le récipient et une troisième procurant une indication de la nécessité de remplissage du récipient, l'échelle étant de préférence conçue pour indiquer la réserve de gaz résiduel dans le récipient pour le gaz à différentes températures ambiantes.
